# EUROPÄISCHE PATENTSCHRIFT

(11) **EP 2 080 144 B1**
(45) Veröffentlichungstag und Bekanntmachung des Hinweises auf die Patenterteilung: **22.08.2018**
(21) Anmeldenummer: 07820817.0
(22) Anmeldetag: 02.10.2007
(51) Int. Cl.: G06F 21/72, G07F 7/08, G07F 7/10, G07F 7/12, G06Q 20/34, G06Q 20/38, G06Q 20/40

(54) **VERFAHREN ZUM FREISCHALTEN EINER CHIPKARTE**
METHOD FOR ENABLING A CHIP CARD
PROCÉDÉ POUR LA LIBÉRATION D'UNE CARTE À PUCE

(30) Priorität: 16.10.2006 DE 102006049442
(43) Veröffentlichungstag der Anmeldung: 22.07.2009
(73) Patentinhaber: Bundesdruckerei GmbH, 10958 Berlin (DE)
(72) Erfinder: BYSZIO, Frank, 16348 Wandlitz (DE)
(74) Vertreter: Richardt Patentanwälte PartG mbB
(86) Internationale Anmeldenummer: PCT/EP2007/060435
(87) Internationale Veröffentlichungsnummer: WO 2008/046733

(56) Entgegenhaltungen:
- EP-A2- 1 316 926
- US-A1- 2002 144 117
- US-A1- 2005 279 826

## Beschreibung

Die Erfindung betrifft ein Verfahren zum Freischalten einer Chipkarte, Chipkarten und ein Datenverarbeitungssystem.

Die Freischaltung einer Chipkarte erfolgt im Stand der Technik üblicherweise durch Authentifizierung des Benutzers gegenüber der Chipkarte, beispielsweise indem der Nutzer seine Personal Identification Number (PIN) oder ein biometrisches Merkmal über einen Fingerabdrucksensor eingibt. Beim Einsatz einer Chipkarte zur Erzeugung von elektronischen Signaturen ist es aus Sicherheitsgründen im Allgemeinen erforderlich, dass sich der Nutzer vor jeder Signatur erneut gegenüber der Chipkarte authentifiziert.

Aus dem Stand der Technik sind auch Chipkarten für die Durchführung von so genannten Massensignaturverfahren bekannt. Bei einem Massensignaturverfahren kann die Chipkarte nach dem Freischalten eine beliebige Anzahl von elektronischen Signaturen erzeugen. Um die erforderliche Sicherheit für die Durchführung von Massensignaturverfahren zu gewährleisten, dürfen solche Verfahren nur in einer sicheren Umgebung, insbesondere einem so genannten Trust-Center oder einer trusted computing platform, ablaufen. Die Einhaltung der Anforderungen an die sichere Umgebung obliegt dabei dem Betreiber, da die Erfüllung dieser Anforderungen nicht durch die Chipkarte überprüft werden kann.

Aus dem Stand der Technik sind Verfahren zur Prüfung der Integrität eines Datenverarbeitungssystems bekannt, insbesondere aus US 5,421,006; US 5,537,540 und US 5,944,821. Dabei wird nach der Installation des Datenverarbeitungssystems aus verschiedenen Dateien, insbesondere Betriebssystemdateien und Programmdateien, ein Integritäts-Bewertungscode generiert. Dieser Code wird in dem Datenverarbeitungssystem abgespeichert.

Vor einer Benutzung des Datenverarbeitungssystems wird der Code erneut generiert und mit dem abgespeicherten Code verglichen. Wenn beide Codes übereinstimmen, gilt die Integrität des Datenverarbeitungssystems als erwiesen. Als Integritäts-Bewertungscodes eignen sich beispielsweise so genannte Prüfsummen ("Check Sums") und Hash-Werte, die auch als Modification Detection Codes (MDCs), kryptographische Prüfsummen ("Cryptographic Check Sums"), kryptographische Hash-Werte ("Cryptographic Hashes"), "Message Digests" oder "Secure Hash Values" bezeichnet werden.

Der Erfindung liegt demgegenüber die Aufgabe zugrunde, ein verbessertes Verfahren zum Freischalten einer Chipkarte zur Verwendung mit einem Datenverarbeitungssystem zu schaffen sowie entsprechende Chipkarten und ein Datenverarbeitungssystem.

Durch die Erfindung wird ein Verfahren zum Freischalten einer ersten Chipkarte zur Verwendung mit einem Datenverarbeitungssystem mit Hilfe einer zweiten Chipkarte, wobei das Datenverarbeitungssystem Mittel zur Erzeugung eines Integritäts-Bewertungscodes aus vorbestimmten, in dem Datenverarbeitungssystem gespeicherten Daten aufweist, geschaffen. Die erste Chipkarte hat zumindest erste und zweite Chipkarten-Funktionen, wobei beispielsweise die erste Chipkarten-Funktion weniger sicherheitskritisch als die zweite Chipkarten-Funktion ist. Zur Freischaltung der ersten Chipkarten-Funktion genügt eine übliche Authentifizierung des Nutzers, beispielsweise durch Eingabe von dessen PIN oder der Erfassung und Überprüfung seiner biometrischen Informationen, wie zum Beispiel seines Fingerabdrucks. Für die Freischaltung der zweiten Chipkarten-Funktion ist zusätzlich der Empfang des Freigabesignals von der anderen Chipkarte erforderlich. Beispielsweise handelt es sich bei der ersten Chipkarten-Funktion um eine Signaturfunktion zum einmaligen elektronischen Signieren einer Datei. Dagegen handelt es sich beispielsweise bei der zweiten Chipkarten-Funktion um eine Massensignaturfunktion, nach deren Freischaltung eine große oder beliebige Anzahl von elektronischen Signaturen erzeugt werden kann. Das Verfahren hat die folgenden Schritte: Freischalten der ersten Chipkartenfunktion durch Authentifizierung des Nutzers gegenüber der ersten Chipkarte, Authentifizierung der ersten und der zweiten Chipkarte mittels gegenseitiger Card-to-Card (C2C) Authentisierung, Anforderung eines Freigabesignals von der ersten Chipkarte an die zweiten Chipkarte, Anforderung des Integritäts-Bewertungscodes von den Mitteln zur Erzeugung eines Integritäts-Bewertungscodes durch die zweite Chipkarte, Entschlüsselung einer dem Datenverarbeitungssystem zugeordneten Signatur durch die zweite Chipkarte, Vergleich der entschlüsselten Signatur mit dem Integritäts-Bewertungscode durch die zweite Chipkarte, Erzeugung des Freigabesignals, wenn die entschlüsselte Signatur und der Integritäts-Bewertungscode übereinstimmen, und Freischalten der zweiten Chipkarten-Funktion und der ersten Chipkarte nach Empfang des Freigabesignals durch die erste Chipkarte

Die Erfindung ermöglicht es also, die Prüfung der Sicherheit und Integrität eines Datenverarbeitungssystems mit in die Freischaltprozedur für eine Chipkarte einzubeziehen, wobei diese Prüfung durch eine weitere Chipkarte durchgeführt wird. Dadurch kann sichergestellt werden, dass die Freischaltung der Chipkarte für eine sicherheitskritische Funktion nur dann erfüllt ist, wenn das Datenverarbeitungssystem auf dessen Sicherheit überprüft worden ist.

Die C2C-Authentisierung kann als einseitige oder gegenseitige Authentisierung mittels eines kryptographischen Verfahrens zwischen den beiden Chipkarten ausgebildet sein. Das Authentisierungsprotokoll bei gegenseitiger C2C-Authentisierung kann auch die Schlüsselvereinbarung für die Unterstützung eines vertrauenswürdigen Kanals (Trusted Channel - TC) mittels Secure Messaging (SM) beinhalten. C2C-Authentisierungsverfahren sind an sich aus dem Stand der Technik bekannt (vgl. Projektgruppe FuE-Projekt "Lösungsarchitektur" zur "elektronischen Gesundheitskarte", "Entscheidungsvorlage: Card-to-Card-Authentisierung", Version 1.2.5 vom 07.02.2005, Bundesministerium für Bildung und Forschung).

Nach einer Ausführungsform der Erfindung handelt es sich bei dem Integritäts-Bewertungscode um einen Hash-Wert, der mit Hilfe einer Hash-Funktion aus mehreren Dateien des Datenverarbeitungssystems gewonnen wird, insbesondere aus ein oder mehreren vorbestimmten Betriebssystemdateien, Programmdateien und/oder Registry-Dateien.

Nach einer Ausführungsform der Erfindung wird der Hash-Wert mit Hilfe eines so genannten Hash-Baumes ermittelt. Dies hat den Vorteil, dass die Erzeugung des Hash-Wertes innerhalb kurzer Zeit erfolgen kann, auch wenn eine relativ große Anzahl von Dateien die Grundlage für die Erzeugung des Hash-Wertes bildet.

Nach einer Ausführungsform der Erfindung ist in dem Datenverarbeitungssystem die Signatur des nach der Systeminstallation oder einem Systemupdate initial ermittelten Integritäts-Bewertungscodes gespeichert. Diese Signatur ist mit dem privaten Schlüssel, zum Beispiel des Herstellers oder Betreibers des Datenverarbeitungssystems, und/oder des Herausgebers der ersten Chipkarte erzeugt worden. Ferner kann in dem Datenverarbeitungssystem der zu dem privaten Schlüssel gehörende öffentliche Schlüssel als Teil eines Zertifikats gespeichert sein.

Nach einer Ausführungsform der Erfindung hat das Datenverarbeitungssystem ein separates Hardware-Modul, welches zur Ermittlung des Integritäts-Bewertungscodes für die Freischaltung der Chipkarte dient. Bei dem Hardware-Modul kann es sich zum Beispiel um ein EPROM handeln, auf dem ein Programm für die Generierung des Integritäts-Bewertungscodes gespeichert ist. Das EPROM kann als separates diskretes Bauelement auf einer Platine des Datenverarbeitungssystems angeordnet sein. Dies hat den Vorteil, dass das Datenverarbeitungssystem auch gegen Manipulationen hinsichtlich der Erzeugung des Integritäts-Bewertungscodes geschützt ist.

Nach einer Ausführungsform der Erfindung erfolgt die Übertragung des Freigabesignals über eine gesicherte Kommunikationsverbindung. Beispielsweise wird hierzu ein Secure Messaging Verfahren eingesetzt. Dadurch ist ein weiterer Schutz gegen Manipulationen gegeben.

Nach einer Ausführungsform der Erfindung hat das Datenverarbeitungssystem ein Anwendungsprogramm zur Eingabe und/oder Erzeugung von Patientendaten. Bei dem Anwendungsprogramm kann es sich zum Beispiel um ein so genanntes Praxisprogramm eines Arztes oder die elektronische Datenverarbeitung eines Krankenhauses oder einer anderen medizinischen Einrichtung handeln. Die Chipkarte kann nach deren Freischaltung für die Zwecke dieses Anwendungsprogramms benutzt werden, wie zum Beispiel zur elektronischen Signatur von Patientendaten, wie zum Beispiel Arztbriefen, elektronischen Rezepten und dergleichen. Ein signiertes elektronisches Rezept kann durch das Anwendungsprogramm beispielsweise über ein Netzwerk an eine Online-Apotheke übertragen werden oder auf einer elektronischen Gesundheitskarte eines Patienten gespeichert werden.

Nach einer Ausführungsform der Erfindung handelt es sich bei der ersten Chipkarte um einen so genannten Heilberufsausweis (HBA) und bei der zweiten Chipkarte um eine so genannte Security Module Card (SMC). Der HBA ist einer bestimmten Person zugeordnet, im Allgemeinen dem behandelnden Arzt, wohingegen die SMC der Institution zugeordnet ist, welche das Datenverarbeitungssystem betreibt, also beispielsweise der Arztpraxis oder dem Krankenhaus.

In einem weiteren Aspekt betrifft die Erfindung eine Chipkarte mit zumindest ersten und zweiten Chipkarten-Funktionen. Zur Freischaltung der ersten Chipkarten-Funktion ist eine Authentifizierung des Benutzers erforderlich. Zur Freischaltung der zweiten Chipkarten-Funktion ist zusätzlich der Empfang eines Freigabesignals von einer anderen Chipkarte erforderlich. Dies ermöglicht es einem Benutzer, die Chipkarte soweit deren erste Chipkarten-Funktion betroffen ist, auch außerhalb des Datenverarbeitungssystems zu verwenden. Beispielsweise handelt es sich bei der ersten Chipkarten-Funktion um eine Signaturfunktion und bei der zweiten Chipkarten-Funktion um eine Massensignaturfunktion.

Wenn es sich bei der Chipkarte um den HBA eines Arztes handelt, so kann der Arzt die Chipkarte in seiner Arztpraxis beispielsweise zum Signieren von elektronischen Rezepten mit Hilfe der Massensignaturfunktion signieren. Wenn der Arzt beispielsweise zu Hause an seinem Privat-PC einen Arztbrief erstellt, so kann er diesen ebenfalls mit Hilfe derselben Chipkarte signieren, und zwar unter Nutzung von deren ersten Chipkarten-Funktion, die ja nur eine Authentifizierung erfordert, die auch mit Hilfe des Heim-PCs erfolgen kann.

In einem weiteren Aspekt betrifft die Erfindung eine Chipkarte zur Erzeugung eines Freigabesignals für eine andere Chipkarte. Die Chipkarte entschlüsselt hierzu eine Signatur, die dem Datenverarbeitungssystem zugeordnet ist. Hierbei handelt es sich um die Signatur eines zum Beispiel initial nach der Systeminstallation des Datenverarbeitungssystems ermittelten Integritäts-Bewertungscodes. Der Integritäts-Bewertungscode wird von dem Datenverarbeitungssystem auf der Grundlage des aktuellen Systemzustandes erneut ermittelt.

Der erneut ermittelte Integritäts-Bewertungscode und der durch Entschlüsselung der Signatur zurückerhaltene initiale Integritäts-Bewertungscode werden von der Chipkarte miteinander verglichen. Wenn beide Codes übereinstimmen, hat das Datenverarbeitungssystem die Integritätsprüfung bestanden, sodass die Sicherheitsanforderungen als erfüllt gelten. Daraufhin erzeugt die Chipkarte ein Freigabesignal, welches vorzugsweise mittels Secure Messaging über das Datenverarbeitungssystem zu der anderen Chipkarte übertragen wird.

In einem weiteren Aspekt betrifft die Erfindung ein Datenverarbeitungssystem mit Mitteln zur Erzeugung eines Integritäts-Bewertungscodes aus vorbestimmten, in dem Datenverarbeitungssystem gespeicherten Daten, Mitteln zum Empfang einer Anforderung eines Freigabesignals einer ersten Chipkarte, Mitteln zur Weiterleitung der anforderugn an die zweite Chipkarte, Mitteln zur Übertragung des Integritäts-Bewertungscodes und einer dem Datenverarbeitungssystem zugeordneten Signatur an eine zweite Chipkarte und Mitteln zur Übertragung eines von der zweiten Chipkarte erzeugten Freigabesignals an die erste Chipkarte zur Freischaltung einer Chipkartenfunktion der ersten Chipkarte, wobei die erste und die zweite Chipkarte Mittel zur Authentifizierung mittels gegenseitiger Card-to-Card-(C2C)-Authentisierung aufweisen.

Nach einer Ausführungsform der Erfindung handelt es sich bei dem Datenverarbeitungssystem um ein Praxis-EDV-System einer Arztpraxis oder einer anderen medizinischen Einrichtung oder die elektronische Datenverarbeitung eines Krankenhauses.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems und erfindungsgemäßer Chipkarten,
- Figur 2: ein Flussdiagramm einer Ausführungsform eines erfindungsgemäßen Verfahrens.

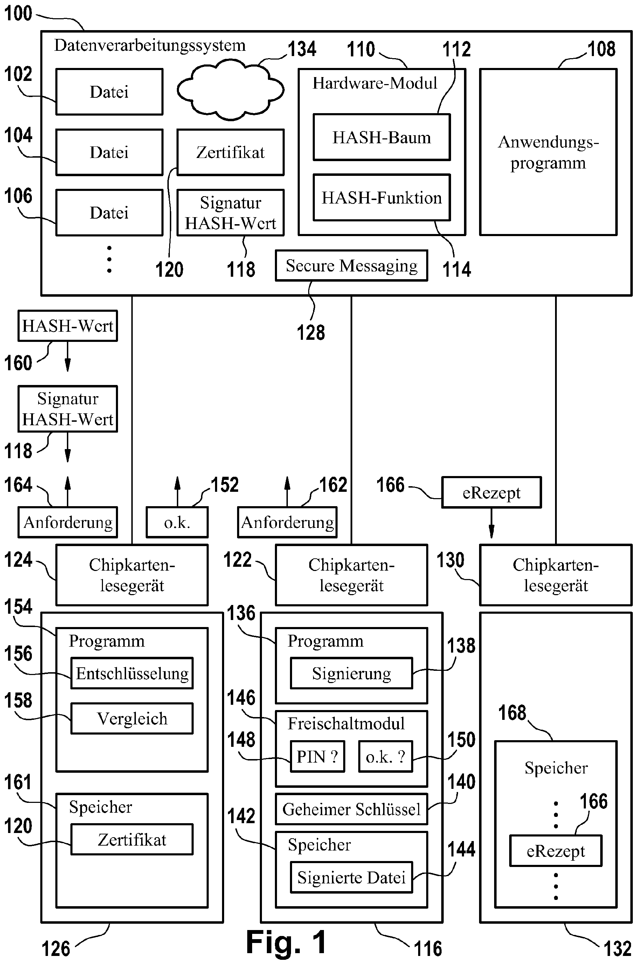

Die Figur 1 zeigt ein Datenverarbeitungssystem 100. In dem Datenverarbeitungssystem 100 sind verschiedene Dateien 102, 104, 106, ... gespeichert. Darunter befinden sich auch solche Dateien, die für den Betrieb des Datenverarbeitungssystems wesentlich sind, wie zum Beispiel Betriebssystemdateien, Programmdateien und/oder Registry-Dateien, und insbesondere zumindest ein Anwendungsprogramm 108.

Das Datenverarbeitungssystem hat ein Hardware-Modul 110, das zum Beispiel als EPROM realisiert sein kann. Das Hardware-Modul 110 ist zur Generierung eines Integritäts-Bewertungscodes aus den aktuell in dem Datenverarbeitungssystem 100 gespeicherten Dateien oder einer vorbestimmten Teilmenge dieser Dateien ausgebildet. Im Weiteren wird ohne Beschränkung der Allgemeinheit davon ausgegangen, dass es sich bei dem Integritäts-Bewertungscode um einen Hash-Wert handelt.

In dem Hardware-Modul 110 kann ein Hash-Baum 112 spezifiziert sein. Die Ermittlung der einzelnen Hash-Werte erfolgt in dem Hardware-Modul 110 durch Ausführung einer Hash-Funktion 114. Zur Generierung eines Hash-Werts zur Prüfung der Integrität des Datenverarbeitungssystems 100 mittels des Hardware-Moduls 110 wird beispielsweise so vorgegangen, dass für bestimmte, in dem Hardware-Modul 110 spezifizierte Dateien des Datenverarbeitungssystems jeweils ein Hash-Wert berechnet wird und die einzelnen Hash-Werte dann über den Hash-Baum 112 zusammengeführt werden, um so einen einzigen Hash-Wert zu erhalten.

Nach der Installation des Datenverarbeitungssystems 100 oder nach einem Update des Datenverarbeitungssystems 100 durch einen hierzu autorisierten Benutzer, wird ein initialer Hash-Wert auf dieselbe Art und Weise erzeugt. Dies kann mit Hilfe des Hardware-Moduls 110 oder durch eine weitere separate Komponente erfolgen. Der initiale Hash-Wert wird digital signiert, und zwar mit einem geheimen öffentlichen Schlüssel des autorisierten Benutzers, des Betreibers des Datenverarbeitungssystems 100 und/oder des Herausgebers einer freizuschaltenden Chipkarte 116. Die Signatur 118 des initialen Hash-Wertes wird in dem Datenverarbeitungssystem 100 gespeichert. Ferner kann in dem Datenverarbeitungssystem 100 auch ein Zertifikat 120 gespeichert werden, welches den zu dem privaten Schlüssel, mit dem die Signatur 118 erzeugt worden ist, gehörenden öffentlichen Schlüssel beinhaltet.

Das Datenverarbeitungssystem hat eine Chipkarten-Schnittstelle, wie zum Beispiel ein Chipkarten-Lesegerät 122 für die Chipkarte 116 sowie eine weitere Chipkarten-Schnittstelle, wie zum Beispiel ein Chipkarten-Lesegerät 124 für eine weitere Chipkarte 126.

Das Datenverarbeitungssystem 100 hat ferner eine Secure Messaging Komponente 128 zum Aufbau eines vertrauenswürdigen Kanals für die Kommunikation zwischen den Chipkarten 126 und 116 über die Chipkarten-Lesegeräte 124 und 122 und das Datenverarbeitungssystem 100. Beispielsweise wird durch die Secure Messaging Komponente 128 zunächst eine gegenseitige C2C-Authentisierung der Chipkarten 116 und 126 vorgenommen, über die eine Schlüsselvereinbarung zwischen den Chipkarten 116 und 126 erfolgt. Auf der Basis dieser Schlüsselvereinbarung wird dann der vertrauenswürdige Kanal (TC) aufgebaut.

Das Datenverarbeitungssystem 100 kann weitere Chipkarten-Schnittstellen, wie zum Beispiel Chipkarten-Lesegeräte 130, für weitere Chipkarten 132 aufweisen.

Bei dem Datenverarbeitungssystem 100 kann es sich um einen Einzelplatzrechner, einen Servercomputer oder ein mehr oder weniger verteiltes Computersystem handeln, wobei dann die einzelnen Systemkomponenten über ein Netzwerk 134 miteinander kommunizieren können.

Die Chipkarte 116 dient zur Verwendung mit dem Anwendungsprogramm 108. Beispielsweise handelt es sich bei der Chipkarte 116, um einen so genannten Heilberufsausweis (HBA) eines Arztes.

Die Chipkarte 116 hat einen Mikroprozessor zur Ausführung von Programminstruktionen 136. Dazu gehören Programminstruktionen 138 zur Erzeugung einer digitalen Signatur mit Hilfe eines in einem geschützten Speicherbereich der Chipkarte 116 gespeicherten geheimen Schlüssels 140. Die Chipkarte 116 hat ferner einen elektronischen Speicher 142 zur Speicherung von ein oder mehreren signierten Dateien 144, wie z.B. einem signierten Arztbrief.

Die Chipkarte 116 hat ein Freischalt-Modul 146 zur Freischaltung von Chipkarten-Funktionen der Chipkarte 116. Hierzu beinhaltet das Freischalt-Modul 146 eine erste Prüffunktion 148 und eine zweite Prüffunktion 150.

Die erste Prüffunktion 148 des Freischalt-Moduls 146 dient zur Überprüfung der Berechtigung des Benutzers, d.h. zur Überprüfung von dessen Authentizität. Hierzu muss der Benutzer beispielsweise in das Chipkarten-Lesegerät 122 oder in das Datenverarbeitungssystem 100 seine PIN eingeben, die dann mit Hilfe der ersten Prüffunktion 148 auf Übereinstimmung mit der gültigen PIN, die in der Chipkarte 116 gespeichert ist, verglichen wird. Wenn die eingegebene PIN zutreffend ist, wird durch die erste Prüffunktion die erste Chipkarten-Funktion freigeschaltet.

Bei der ersten Chipkarten-Funktion kann es sich um den einmaligen Aufruf der Programminstruktionen 138 für die Generierung einer einzelnen digitalen Signatur handeln. Sollen mehrere digitale Signaturen erzeugt werden, so ist in diesem Betriebsmodus jedes Mal die Eingabe und Überprüfung der PIN erforderlich.

Die zweite Prüffunktion 150 dient zur Überprüfung, ob die erste Prüffunktion 148 erfüllt worden ist, d.h. eine gültige PIN eingegeben worden ist, und ob zusätzlich ein Freigabesignal 152 von der Chipkarte 126 empfangen worden ist. Wenn diese beiden Bedingungen erfüllt sind, schaltet die zweite Prüffunktion 150 die zweite Chipkarten-Funktion frei. Bei der zweiten Chipkarten-Funktion kann es sich um einen Massensignaturverfahren handeln, bei dessen Durchführung die Programminstruktionen 138 mehrfach hintereinander aufgerufen werden können, um mehrere digitale Signaturen zu erzeugen, ohne dass vor jeder digitalen Signatur die PIN eingegeben werden muss.

Die Chipkarte 126 hat einen Mikroprozessor zur Ausführung von Programminstruktionen 154. Diese beinhalten Programminstruktionen 156 zur Entschlüsselung der digitalen Signatur 118 mit Hilfe des öffentlichen Schlüssels, der in dem Zertifikat 120 gespeichert ist.

Die Programminstruktionen 158 dienen zum Vergleich des Resultats der Entschlüsselung der Signatur 118 mit einem von dem Datenverarbeitungssystem 100 gelieferten Hash-Wert 160. Wenn das Resultat der Entschlüsselung der Signatur 118 mit dem Hash-Wert 160 übereinstimmt, generieren die Programminstruktionen 154 das Freigabesignal 152. Die Chipkarte 126 hat ferner einen elektronischen Speicher 161 zur Speicherung des Zertifikats 120.

Bei der Chipkarte 126 kann es sich beispielsweise um eine so genannte Secure Module Card (SMC) handeln. Eine solche SMC ist nicht einem bestimmten Benutzer, sondern der Institution zugeordnet, die für das Datenverarbeitungssystem 100 verantwortlich ist und/oder dieses betreibt, beispielsweise eine Arztpraxis oder ein Krankenhaus. Das Vorhandensein der Chipkarte 126 in dem Chipkarten-Lesegerät 124 ist eine notwendige, nicht aber eine hinreichende Voraussetzung, zur Nutzung des Datenverarbeitungssystems 100, wenn die Chipkarte 126 als SMC ausgebildet ist (zu SMC vgl. TÜVIT, "Anforderungen an Kartenleser für Gesundheitskarten", Jürgen Atrott, TÜV Informationstechnik GmbH).

Nachdem das Datenverarbeitungssystem 100 installiert worden ist oder nachdem ein Update in dem Datenverarbeitungssystem 100 installiert worden ist, wird ein initialer Hash-Wert aus den vorbestimmten Dateien 102, 104, 106, 108, ... des Datenverarbeitungssystems 100 generiert und mit dem privaten Schlüssel des hierzu autorisierten Benutzers signiert, sodass man die Signatur 118 erhält.

Die Chipkarte 126 wird dann in das Chipkarten-Lesegerät 124 eingeführt, um eine Kopie des Zertifikats 120 in deren Speicher 161 abzuspeichern, sodass der Chipkarte 126 der öffentliche Schlüssel zur Entschlüsselung der Signatur 118 zur Verfügung steht.

Der Arzt steckt dann seine Chipkarte 116 in das Chipkarten-Lesegerät 122 ein. Daraufhin erfolgt eine Authentisierung des Arztes, und zwar in der hier betrachteten Ausführungsform durch Eingabe einer PIN. Die erste Prüffunktion 148 prüft die Gültigkeit der PIN und schaltet gegebenenfalls die erste Chipkarten-Funktion der Chipkarte 116 frei.

Die zweite Prüffunktion 150 generiert daraufhin eine Anforderung 162, die über das Chipkarten-Lesegerät 122 an das Datenverarbeitungssystem 100 übertragen wird. Das Datenverarbeitungssystem 100 baut daraufhin mit Hilfe seiner Secure Messaging Komponente 128 einen vertrauenswürdigen Kanal zwischen der Chipkarte 116 und der Chipkarte 126 auf.

Die Anforderung 122 wird von dem Datenverarbeitungssystem 100 an die Chipkarte 126 weitergeleitet. Die Programminstruktionen 154 generieren daraufhin eine Anforderung 164 an das Datenverarbeitungssystem 100. Aufgrund der Anforderung 164 spricht das Datenverarbeitungssystem dessen Hardware-Modul 110 an, sodass dieses einen aktuellen Hash-Wert 160 aus den vorgegebenen Dateien des Datenverarbeitungssystems 100 generiert.

Dieser Hash-Wert 160 und die Signatur 180 des initial ermittelten Hash-Werts werden von dem Datenverarbeitungssystem 100 an die Chipkarte 126 übergeben. Daraufhin wird die Signatur 118 mit Hilfe der Programminstruktionen 156 entschlüsselt, und zwar unter Zuhilfenahme des in dem Zertifikat 120 gespeicherten öffentlichen Schlüssels.

Das Ergebnis der Entschlüsselung, das aufgrund der Ausführung der Programminstruktionen 156 ermittelt wird, wird durch Ausführung der Programminstruktionen 158 ausgewertet, indem das Ergebnis der Entschlüsselung mit dem aktuellen Hash-Wert 160 verglichen wird. Wenn das Ergebnis der Entschlüsselung der Signatur 118 mit dem Hash-Wert 160 übereinstimmt, generiert das Programm 154 das Freigabesignal 152, welches von dem Datenverarbeitungssystem 100 an die Chipkarte 116 weitergeleitet wird.

Die zweite Prüffunktion 150 schaltet dann die zweite Chipkarten-Funktion frei. Der Arzt kann dann beispielsweise mit Hilfe des Anwendungsprogramms 108 elektronische Rezepte für einen Patienten generieren. Jedes elektronische Rezept 166 (so genanntes "eRezept") wird dabei einzeln digital durch die Chipkarte 116 signiert, und zwar mit dem Massensignaturverfahren, sodass der Arzt nicht für jede digitale Signatur seine PIN erneut eingeben muss. Die signierten elektronischen Rezepte 166 werden dann über das Chipkarten-Lesegerät 130 in einem elektronischen Speicher 168 der Chipkarte 132 gespeichert. Bei der Chipkarte 132 handelt es sich beispielsweise um die elektronische Gesundheitskarte (eGK) eines Patienten.

Durch die Chipkarte 116 können auch andere Patientendaten elektronisch signiert werden, wie zum Beispiel diagnostische Daten, Befunde, Ergebnisse von Blutanalysen und/oder radiologische Daten.

Der Arzt kann die Chipkarte 116 auch außerhalb des Datenverarbeitungssystems 100 verwenden, beispielsweise mit seinem Heim-PC. Da der Heim-PC des Arztes nicht die Voraussetzungen einer Trusted Computing Platform erfüllen muss, wie es für die Verwendung des Datenverarbeitungssystem 100 mit der Chipkarte 116 der Fall ist, kann dort nur die erste Chipkarten-Funktion freigeschaltet werden, nicht aber die zweite Chipkarten-Funktion. Der Arzt kann also beispielsweise zu Hause einen einzelnen Patientenbrief erstellen und diesen nach Eingabe seiner PIN digital signieren.

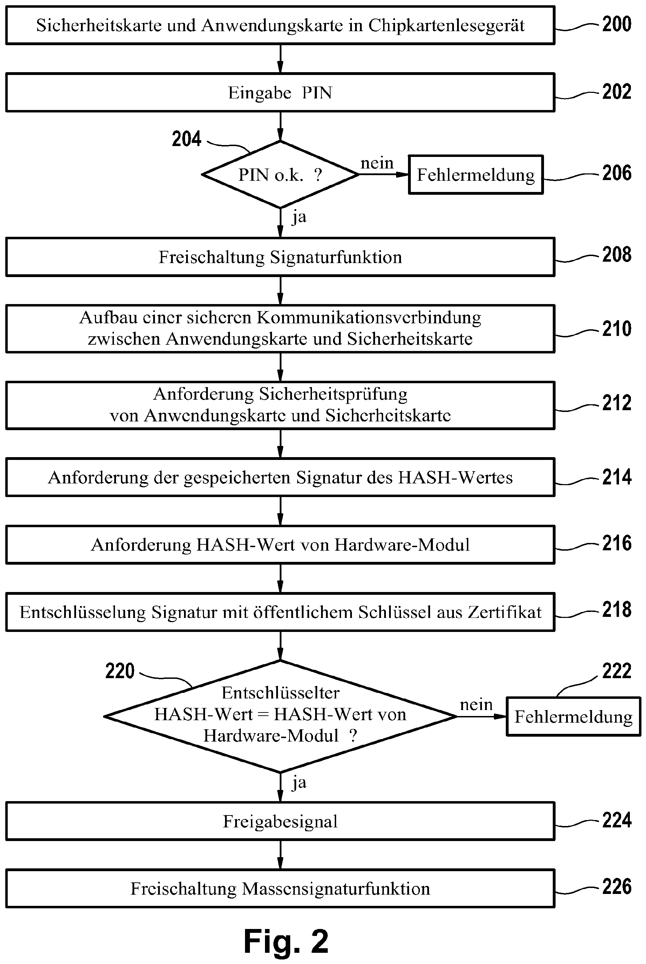

Die Figur 2 zeigt ein entsprechendes Flussdiagramm. Im Schritt 200 wird eine Sicherheitskarte, wie zum Beispiel eine SMC (vgl. Chipkarte 126 der Figur 1), und eine Anwendungskarte zur Nutzung eines Anwendungsprogramms, insbesondere ein HBA (vgl. Chipkarte 116 und Anwendungsprogramm 108 der Figur 1) in entsprechende Chipkarten-Lesegeräte eingeführt (vgl. die Chipkarten-Lesegeräte 124 bzw. 122 der Figur 1).

In dem Schritt 202 erfolgt eine Authentisierung gegenüber der Anwendungskarte, beispielsweise durch Eingabe einer PIN. In dem Schritt 204 wird durch die Anwendungskarte geprüft, ob die PIN zutreffend ist. Falls dies nicht der Fall ist, erfolgt in dem Schritt 206 eine Fehlermeldung. Wenn die PIN hingegen gültig ist, wird in dem Schritt 204 durch die Anwendungskarte eine erste Chipkarten-Funktion freigeschaltet, wie zum Beispiel eine Signaturfunktion.

In dem Schritt 210 wird eine sichere Kommunikationsverbindung mittels eines Secure Messaging Verfahrens zwischen der Anwendungskarte und der Sicherheitskarte aufgebaut, insbesondere nach einer C2C-Authentisierung. In dem Schritt 212 fordert die Anwendungskarte eine Sicherheitsprüfung von der Sicherheitskarte an, um sicherzustellen, dass das Datenverarbeitungssystem vertrauenswürdig und integer ist, d.h. zum Beispiel nicht von Viren oder anderen Schad-Programmen befallen ist.

Neben dem aktuellen Hash-Wert erhält die Sicherheitskarte.

Die Sicherheitskarte fordert daraufhin die Signatur eines initial nach der Installation des Datenverarbeitungssystems oder nach einem Update erzeugten Hash-Werts (Schritt 214) und einen aktuellen Integritäts-Bewertungscode (Schritt 216), d.h. einen Hash-Wert, von dem Datenverarbeitungssystem an (vgl. Hash-Wert 160 der Figur 1). Dieser wird vorzugsweise von einem Hardware-Modul des Datenverarbeitungssystems generiert.

Die Signatur des Hash-Wertes wird in dem Schritt 218 mit Hilfe des entsprechenden öffentlichen Schlüssels entschlüsselt. Der öffentliche Schlüssel kann beispielsweise einem Zertifikat entnommen werden, welches in der Sicherheits-Chipkarte gespeichert ist. Alternativ kann der öffentliche Schlüssel bzw. das entsprechende Zertifikat von einem externen Server abgefragt werden.

In dem Schritt 220 wird geprüft, ob der durch Entschlüsselung gewonnene Hash-Wert mit dem aktuellen Hash-Wert, der von dem Hardware-Modul geliefert worden ist, übereinstimmt. Falls dies nicht der Fall ist, erfolgt in dem Schritt 222 eine Fehlermeldung. Liegt hingegen eine Übereinstimmung vor, wird in dem Schritt 224 durch die Sicherheitskarte ein Freigabesignal generiert, welches über den vertrauenswürdigen Kanal an die Anwendungskarte übertragen wird, sodass diese in dem Schritt 226 ihre zweite Chipkarten-Funktion freischaltet, beispielsweise also eine Massensignaturfunktion.

### Bezugszeichenliste

- 100: Datenverarbeitungssystem
- 102: Datei
- 104: Datei
- 106: Datei
- 108: Anwendungsprogramm
- 110: Hardware-Modul
- 112: Hash-Baum
- 114: Hash-Funktion
- 116: Chipkarte
- 118: Signatur
- 120: Zertifikat
- 122: Chipkarten-Lesegerät
- 124: Chipkarten-Lesegerät
- 126: Chipkarte
- 128: Secure Messaging Komponente
- 130: Chipkarten-Lesegerät
- 132: Chipkarte
- 134: Netzwerk
- 136: Programminstruktionen
- 138: Programminstruktionen
- 140: geheimer Schlüssel
- 142: Speicher
- 144: signierte Datei
- 146: Freischalt-Modul
- 148: erste Prüffunktion
- 150: zweite Prüffunktion
- 152: Freigabesignal
- 154: Programminstruktionen
- 156: Programminstruktionen
- 158: Programminstruktionen
- 160: Hash-Wert
- 161: elektronische Speicher
- 162: Anforderung
- 164: Anforderung
- 166: Rezept
- 168: elektronischer Speicher

## Patentansprüche

1. Verfahren zum Freischalten einer ersten Chipkarte (116) zur Verwendung mit einem Datenverarbeitungssystem (100) mit Hilfe einer zweiten Chipkarte (126), wobei das Datenverarbeitungssystem Mittel (110) zur Erzeugung eines Integritäts-Bewertungscodes aus vorbestimmten, in dem Datenverarbeitungssystem gespeicherten Daten aufweist, wobei die erste Chipkarte eine erste und eine zweite Chipkarten-Funktion hat, und wobei die erste Chipkarte Mittel (148) zur Authentifizierung eines Nutzers hat, wobei eine Freischaltung der ersten Chipkarten-Funktion die Authentifizierung des Nutzers voraussetzt, und eine Freischaltung der zweiten Chipkarten-Funktion die Authentifizierung des Nutzers und den Empfang des Freigabesignals voraussetzt, mit folgenden Schritten:
- Freischalten der ersten Chipkarten-Funktion durch Authentifizierung des Nutzers gegenüber der ersten Chipkarte,
- Authentifizierung der ersten und der zweiten Chipkarte mittels gegenseitiger Card-to-Card (C2C) Authentisierung.
- Anforderung (162) eines Freigabesignals (152) von der ersten Chipkarte an die zweiten Chipkarte,
- Anforderung (164) des Integritäts-Bewertungscodes von den Mittel (110) zur Erzeugung eines Integritäts-Bewertungscodes durch die zweite Chipkarte,
- Entschlüsselung (156) einer dem Datenverarbeitungssystem zugeordneten Signatur (118) durch die zweite Chipkarte,
- Vergleich (158) der entschlüsselten Signatur mit dem Integritäts-Bewertungscode durch die zweite Chipkarte,
- Erzeugung des Freigabesignals, wenn die entschlüsselte Signatur und der Integritäts-Bewertungscode übereinstimmen,
- Freischalten der zweiten Chipkarten-Funktion und der ersten Chipkarte nach Empfang des Freigabesignals durch die erste Chipkarte.

2. Verfahren nach Anspruch 1, wobei die Mittel (110) zur Erzeugung eines Integritäts-Bewertungscodes zur Durchführung einer Hash-Funktion zur Erzeugung eines Hash-Wertes mit Hilfe eines Hash-Baumes ausgebildet sind.

3. Verfahren nach Anspruch 1 oder 2, wobei die Signatur in dem Datenverarbeitungssystem gespeichert ist und zur Entschlüsselung an die zweite Chipkarte übertragen wird.

4. Verfahren nach einem der vorhergehenden Ansprüche, wobei die dem Datenverarbeitungssystem zugeordnete Signatur mit einem privaten Schlüssel eines Herausgebers der ersten Chipkarte erzeugt worden ist und wobei in dem Datenverarbeitungssystem und/oder in der zweiten Chipkarte ein Zertifikat (120) gespeichert ist, welches den dem privaten Schlüssel zugeordneten öffentlichen Schlüssel beinhaltet.

5. Verfahren nach Anspruch 4, wobei es sich bei der ersten Chipkarten-Funktion um eine Signaturfunktion und bei der zweiten Chipkarten-Funktion um eine Massensignaturfunktion handelt.

6. Verfahren nach Anspruch 5, wobei das Datenverarbeitungssystem ein Anwendungsprogramm zur Eingabe und/oder Erzeugung von Patientendaten aufweist, wobei die Patientendaten mit Hilfe der ersten Chipkarten-Funktion oder der zweiten Chipkarten-Funktion signiert werden.

7. Verfahren nach Anspruch 6, wobei das Anwendungsprogramm zur Erzeugung eines elektronischen Rezepts (166) ausgebildet ist, wobei das elektronische Rezept mit Hilfe der ersten Chipkarten-Funktion oder der zweiten Chipkarten-Funktion signiert wird, und das signierte elektronische Rezept auf einer elektronischen Gesundheitskarte gespeichert wird.

8. Verfahren nach einem der vorhergehenden Ansprüche, wobei es sich bei der ersten Chipkarte um einen Heilberufsausweis (HBA) und bei der zweiten Chipkarte um eine Security Module Card (SMC) handelt.

9. Chipkartensystem bestehend aus einer ersten und einer zweiten Chipkarte, wobei die erste Chipkarte die folgenden Mittel umfasst:
- eine erste und eine zweite Chipkarten-Funktion,
- Mittel (148) zur Authentifizierung eines Nutzers,
- Mittel (146, 148, 150) zur Freischaltung einer ersten Chipkarten-Funktion nach einer Authentifizierung des Nutzers und zur Freischaltung einer zweiten Chipkarten-Funktion, wenn nach der Authentifizierung des Nutzers ein Freigabesignal (152) empfangen wird,
**dadurch gekennzeichnet, dass**
- die erste Chipkarte ferner Mittel zum Empfang eines Freigabesignals (152) von einer zweiten Chipkarte über eine gesicherte Kommunikationsverbindung umfasst, und
- die erste und die zweite Chipkarte Mittel zur Authentifizierung mittels gegenseitiger Card-to-Card (C2C) Authentisierung aufweisen.

10. Chipkartensystem nach Anspruch 9, wobei es sich bei der ersten Chipkarten-Funktion um eine Signaturfunktion und bei der zweiten Chipkarten-Funktion um eine Massensignaturfunktion handelt.

11. Chipkartensystem nach Anspruch 9 oder 10, wobei die zweite Chipkarte die folgenden Mittel umfasst:
- Mittel (156) zur Entschlüsselung einer Signatur (118), die einem Datenverarbeitungssystem zugeordnet ist,
- Mittel (158) zum Vergleich eines von der Datenverarbeitungsanlage gelieferten Integritäts-Bewertungscodes mit der entschlüsselten Signatur,
- Mittel (154) zur Erzeugung eines Freigabesignals (152) für eine andere Chipkarte (116), die zur Verwendung mit dem Datenverarbeitungssystem vorgesehen ist.

12. Chipkartensystem nach einem der Ansprüche 9 bis 11, wobei es sich bei der zweiten Chipkarte um eine Security Module Card (SMC) handelt.

13. Datenverarbeitungssystem mit
- Mitteln (110) zur Erzeugung eines Integritäts-Bewertungscodes (160) aus vorbestimmten, in dem Datenverarbeitungssystem gespeicherten Daten,
- Mitteln (124) zur Übertragung des Integritäts-Bewertungscodes (160) und einer dem Datenverarbeitungssystem zugeordneten Signatur (118) an eine zweite Chipkarte (126),
**dadurch gekennzeichnet, dass** das Datenverarbeitungssystem zudem umfasst:
- Mittel (122) zum Empfang einer Anforderung (162) eines Freigabesignals (152) einer ersten Chipkarte (116),
- Mittel zur Weiterleitung der Anforderung (162) an die zweite Chipkarte,
- Mittel (128) zur Übertragung eines von der zweiten Chipkarte erzeugten Freigabesignals (152) an die erste Chipkarte zur Freischaltung einer Chipkartenfunktion der ersten Chipkarte, wobei die erste und die zweite Chipkarte Mittel zur Authentifizierung mittels gegenseitiger Card-to-Card (C2C) Authentisierung aufweisen.

## Claims

1. A method for enabling a first chip card (116) for use with a data processing system (100) with the aid of a second chip card (126), wherein the data processing system has means (110) for generating an integrity assessment code from predetermined data which are stored in the data processing system, wherein the first chip card has a first and a second chip card function, and wherein the first chip card has means (148) for authenticating a user, wherein enablement of the first chip card function presupposes the authentication of the user, and enablement of the second chip card function presupposes the authentication of the user and receipt of the enable signal, said method having the following steps:
- enabling the first chip card function by authentication of the user with respect to the first chip card,
- authenticating the first and the second chip card by means of mutual card-to-card (C2C) authentication,
- requesting (162) an enable signal (152) from the second chip card by the first chip card.
- requesting (164) the integrity assessment code from the means (110) for generating an integrity assessment code by the second chip card,
- decrypting (156) a signature (118) associated with the data processing system by the second chip card,
- comparing (158) the decrypted signature with the integrity assessment code by the second chip card,
- generating the enable signal if the decrypted signature and integrity assessment code match,
- enabling the second chip card function and the first chip card after the first chip card has received the enable signal.

2. The method according to claim 1, wherein the means (110) for generating an integrity assessment code are designed to carry out a hash function for generating a hash value with the aid of a hash tree.

3. The method according to claim 1 or 2, wherein the signature is stored in the data processing system and is transmitted to the second chip card for decryption.

4. The method according to any one of the preceding claims, wherein the signature associated with the data processing system was generated using a private key of an issuer of the first chip card, and wherein a certificate (120) which contains the public key associated with the private key is stored in the data processing system and/or in the second chip card.

5. The method according to claim 4, wherein the first chip card function is a signature function and the second chip card function is a mass signature function.

6. The method according to claim 5, wherein the data processing system has an application program for inputting and/or generating patient data, wherein the patient data are signed with the aid of the first chip card function or the second chip card function.

7. The method according to claim 6, wherein the application program is designed to generate an electronic receipt (166), wherein the electronic receipt is signed with the aid of the first chip card function or the second chip card function and the signed electronic receipt is stored on an electronic health card.

8. The method according to any one of the preceding claims, wherein the first chip card is a health professional card (HPC) and the second chip card is a security module card (SMC).

9. A chip card system consisting of a first and a second chip card, wherein the first chip card comprises the following means:
- a first and a second chip card function,
- means (148) for authenticating a user,
- means (146, 148, 150) for enabling a first chip card function after authentication of the user and for enabling a second chip card function when an enable signal (152) is received after the authentication of the user,
**characterised in that**
- the first chip card also comprises means for receiving an enable signal (152) from a second chip card via a stored communications link, and
- the first and the second chip card have means for authentication by means of mutual card-to-card (C2C) authentication.

10. The chip card system according to claim 9, wherein the first chip card function is a signature function and the second chip card function is a mass signature function.

11. The chip card system according to claim 9 or 10, wherein the second chip card comprises the following means:
- means (156) for decrypting a signature (118) which is associated with a data processing system,
- means (158) for comparing an integrity assessment code delivered by the data processing system with the decrypted signature,
- means (154) for generating an enable signal (152) for another chip card (116) intended for use with the data processing system.

12. The chip card system according to any one of claims 9 to 11, wherein the second chip card is a security module card (SMC).

13. A data processing system comprising
- means (110) for generating an integrity assessment code (160) from predetermined data stored in the data processing system,
- means (124) for transmitting the integrity assessment code (160) and a signature (118) associated with the data processing system to a second chip card (126),
**characterised in that** the data processing system additionally comprises:
- means (122) for receiving a request (162) for an enable signal (152) of a first chip card (116),
- means for forwarding the request (162) to the second chip card,
- means (128) for transmitting an enable signal (152) generated by the second chip card to the first chip card in order to enable a chip card function of the first chip card, wherein the first and the second chip card have means for authentication by means of mutual card-to-card (C2C) authentication.

## Revendications

1. Procédé de libération d'une première carte à puce (116) en vue d'un emploi avec un système de traitement de données (100) à l'aide d'une deuxième carte à puce (126), où le système de traitement de données présente des moyens (110) pour la génération d'un code d'évaluation d'intégrité à partir de données prédéterminées, stockées dans le système de traitement de données, où la première carte à puce a une première et une deuxième fonction de carte à puce, et où la première carte à puce a des moyens (148) destinés à l'authentification d'un utilisateur, où une libération de la première fonction de carte à puce est conditionnée par l'authentification de l'utilisateur, et une libération de la deuxième fonction de carte à puce est conditionnée par l'authentification de l'utilisateur et la réception du signal de libération, avec les étapes suivantes :
- la libération de la première fonction de carte à puce par l'authentification de l'utilisateur vis-à-vis de la première carte à puce,
- l'authentification de la première et de la deuxième carte à puce au moyen d'une authentification réciproque de carte à carte (C2C),
- la requête (162) d'un signal de libération (152) de la première carte à puce vers la deuxième carte à puce,
- la requête (164) du code d'évaluation d'intégrité pour la génération du code d'évaluation d'intégrité par les moyens (110) par la deuxième carte à puce,
- le déchiffrement (156) d'une signature (118) associée au système de traitement de données par la deuxième carte à puce,
- la comparaison (158) de la signature déchiffrée avec le code d'évaluation d'intégrité par la deuxième carte à puce,
- la génération du signal de libération lorsque la signature déchiffrée et le code d'évaluation d'intégrité concordent,
- la libération de la deuxième fonction de carte à puce et de la première carte à puce après la réception du signal de libération par la première carte à puce.

2. Procédé selon la revendication 1, dans lequel les moyens (110) pour la génération d'un code d'évaluation d'intégrité sont conçus pour l'exécution d'une fonction de hachage destinée à la génération d'une valeur de hachage à l'aide d'un arbre de hachage.

3. Procédé selon la revendication 1 ou 2, dans lequel la signature est stockée dans le système de traitement de données et est transmis à la deuxième carte à puce pour le déchiffrement.

4. Procédé selon l'une des revendications précédentes, dans lequel la signature associée au système de traitement de données a été générée avec une clé privée d'un éditeur de la première carte à puce et dans lequel un certificat (120) est stocké dans le système de traitement de données et/ou dans la deuxième carte à puce, lequel contient la clé publique correspondant à la clé privée.

5. Procédé selon la revendication 4, dans lequel, dans le cas de la première fonction de carte à puce, il s'agit d'une fonction de signature et dans le cas de la deuxième fonction de carte à puce, il s'agit d'une fonction de signature en masse.

6. Procédé selon la revendication 5, dans lequel le système de traitement de données présente un programme d'application pour la saisie et/ou la génération de données de patients, où les données de patients sont signées à l'aide de la première fonction de carte à puce ou de la deuxième fonction de carte à puce.

7. Procédé selon la revendication 6, dans lequel le programme d'application est conçu pour la génération d'une prescription électronique (166), où la prescription électronique est signée à l'aide de la première fonction de carte à puce ou de la deuxième fonction de carte à puce, et la prescription électronique signée est stockée sur une carte de santé électronique.

8. Procédé selon l'une des revendications précédentes, dans lequel, dans le cas de la première carte à puce, il s'agit d'une carte professionnelle de santé (HBA), et dans le cas de la deuxième fonction de carte à puce, il s'agit d'une carte de module de sécurité (SMC).

9. Système de cartes à puce constitué d'une première et d'une deuxième carte à puce, où la première carte à puce comprend les moyens suivants :
- une première et une deuxième fonction de carte à puce,
- des moyens (148) pour l'authentification d'un utilisateur,
- des moyens (146, 148, 150) pour la libération d'une première fonction de carte à puce après une authentification de l'utilisateur et pour la libération d'une deuxième fonction de carte à puce lorsqu'un signal de libération (152) est reçu après l'authentification de l'utilisateur,
**caractérisé en ce que**
- la première carte à puce comprend en outre des moyens pour la réception d'un signal de libération (152) par une deuxième carte à puce par le biais d'une connexion de communication sécurisée, et
- la première et la deuxième carte à puce présentent des moyes pour l'authentification au moyen d'une authentification réciproque de carte à carte (C2C).

10. Système de cartes à puce selon la revendication 9, dans lequel, il s'agit, dans le cas de la première fonction de carte à puce, d'une fonction de signature, et dans le cas de la deuxième fonction de carte à puce, d'une fonction de signature en masse.

11. Système de cartes à puce selon la revendication 9 ou 10, dans lequel la deuxième carte à puce comprend les moyens suivants :
- des moyens (156) pour le déchiffrement d'une signature (118) qui est associée à un système de traitement de données,
- des moyens (158) pour la comparaison d'un code d'évaluation d'intégrité avec la signature déchiffrée délivré par l'installation de traitement des données,
- des moyens (154) pour la génération d'un signal de libération (152) pour une autre carte à puce (116) qui est prévue pour l'emploi avec le système de traitement de données.

12. Système de cartes à puce selon l'une des revendications 9 à 11, dans lequel, dans le cas de la deuxième carte à puce, il s'agit d'une carte de module de sécurité (SMC).

13. Système de traitement de données doté
- de moyens (110) pour la génération d'un code d'évaluation d'intégrité (160) à partir de données prédéterminées, stockées dans le système de traitement de données,
- de moyens (124) pour la transmission du code d'évaluation d'intégrité (160) et d'une signature (118) associée au système de traitement de données à une deuxième carte à puce (126),
**caractérisé en ce que** le système de traitement de données comprend en outre :
- des moyens (122) pour la réception d'une requête (162) d'un signal de libération (152) d'une première carte à puce (116),
- des moyens pour le transfert de la requête (162) à la deuxième carte à puce,
- des moyens (128) pour la transmission d'un signal de libération (152) généré par la deuxième carte à puce à la première carte à puce pour la libération d'une fonction de carte à puce de la première carte à puce, où les première et deuxième cartes à puce présentent des moyens pour l'authentification au moyen d'une authentification réciproque de carte à carte (C2C).
